# EUROPEAN PATENT SPECIFICATION

(11) **EP 0 611 473 B1**
(45) Date of publication and mention of the grant of the patent: **02.05.1997**
(21) Application number: 92921672.9
(22) Date of filing: 01.10.1992
(51) Int. Cl.: G11B 7/24, G11B 7/26

(54) **OPTICAL DISC MASTER**
OPTISCHE MATRIZENPLATTE
DISQUE OPTIQUE PERE

(30) Priority: 03.10.1991 US 771392
(43) Date of publication of application: 24.08.1994
(73) Proprietor: DEL MAR AVIONICS, Irvine, California 92714-4878 (US)
(72) Inventor: BEAUCHAMP, Robert, Westminster, CA 92683 (US); BURKETT, Daniel, Lakewood, CA 90715 (US); NORTON, James Rural Route 1, Minneola, KS 67865 (US); LOEPPKY, David, Irvine, CA 92714 (US); DOBBIN, Robert, Irvine, CA 92715 (US)
(74) Representative: Sorrell, Terence Gordon
(86) International application number: PCT/US92/08386
(87) International publication number: WO 93/07615

(56) References cited:
- EP-A- 0 410 879
- EP-A- 0 447 711
- JP-A-58 133 649
- US-A- 4 405 862
- US-A- 4 430 401
- US-A- 4 451 915
- US-A- 4 554 655
- US-A- 5 004 660
- US-A- 5 004 660
- PATENT ABSTRACTS OF JAPAN vol. 8, no. 208 (P-302) 21 September 1984 & JP-A-59 092 449 (NIPPON COLUMBIA) 28 May 1984
- PATENT ABSTRACTS OF JAPAN vol. 8, no. 208 (P-302) 21 September 1984 & JP-A-59 092 449

## Description

This invention relates to the recording of data on optical discs, and more specifically towards obtaining superior laser tracking and improved pit geometry in optical recordings created within the art of optical disc mastering.

Various methods have been employed in recording data on optical discs, wherein data is recorded by having a laser burn pits into an optical disc. Optical disc (OD) masters are articles from which prerecorded mass produced consumer OD's are subsequently molded. The master is a first article in the OD manufacturing process having data or information recorded on a disc or platter that can be read by optical means. All subsequent OD manufacturing and duplication processes transfer that identical form, format and data from the original first article by various means including: vacuum deposition; electroforming/plating; or injection molding processes.

Past techniques for producing masters combined existing technologies from various industries. The most prominent of these techniques is the photo resist concept of the semiconductor industry. The master has formed on it a series of pits which serve to optically record information. The pits form a spiral line or track starting at the center of the disc and continuing to the outer periphery of the disc. Conventionally, the pits are approximately 0.6 µm (10⁻⁶ meters) wide, 0.9 to 3.3 µm long, 0.12 µm deep, and are separated from neighbouring tracks, on either side thereof, by 1.6 µm center to center.

To record using the photoresist technique, a laminate of photoresist material is spun upon a very smooth, polished circular plate of glass. The glass plate with photoresist laminate is then placed in an oven to cure the photoresist. The cured, photoresist coated, glass plate is next set upon a turntable which is caused to spin. A data modulated laser optical system is focused on the glass plate, while suspended by a relatively large and complex translational mechanism, to cause the focused spot laser to move very gradually, at a steady radial rate, outwardly from the center of the spinning glass plate while concomitantly irradiating the surface of the plate, the effect being to produce a spiral track of data in the photoresist material. The turntable spins at either a constant angular velocity or a constant linear velocity (CLV) while any point on the surface of the plate is being irradiated by a laser. This process is referred to as mastering, wherein data is recorded by creating pits in the optical disc from the exposure to laser light along the spiral path as the plate rotates. After the desired data has been recorded in the photoresist laminate, the plate is placed in at least one bath of developing solution, typically a process that requires multiple steps, whereby, the exposed areas in the photoresist are etched out leaving a series of pits. The glass plate with etched photoresist is then oven dried, followed by metalization of the photoresist laminate by vacuum deposition of a thin conductive laminate of metal thereon, which yields the desired master. The master is finally subjected to an analysis and validation process prior to electroforming to make a stamper and replication.

The foregoing type of mastering system is quite expensive in terms of capital equipment involved, labor, space, sensitivity to motion and shock, time and costs. Operating costs to produce a single master can be relatively expensive.

As an alternative to the photoresist mastering system another technique, known as a non-photoresist (NPR), or direct offset method, utilizes what is referred to as a dry process formula (DPF). This process incorporates the use of a material which undergoes ablation when exposed to a laser, thereby, forming the desired pit. This process has brought forth a number of advantages over the photoresist process. These advantages include a reduction in the process steps by eliminating, among others, developing and curing steps, which results in a less costly procedure and a much shorter completion time, and the ability to monitor the quality of the disc concurrent with the mastering process of recording data thereon. The plate and DPF material are set upon a turntable for mastering and concomitant analysis. Metalization of the pitted layer is conducted to complete the mastering process. Once such a master is made, conventional eletroplating and replication processes are accomplished to make a stamper which is then used for mass duplication of OD's by conventional injection over the prior art largely due to eliminating etching processing and oven-curing but it does not eliminate motion molding processes. The NPR system makes some improvement over the prior art largely due to eliminating etching processing and oven-curing but it does not eliminate motion sensitivity nor the need for expensive and complex translator mechanisms and the glass reconditioning processes. Capital expense for such systems is still substantial, and the cost to produce a single master is still relatively expensive.

Yet another mastering process is referred to as a direct metal mastering (DMM) process. In the DMM process, instead of using a laser to either expose or cause ablation of the surface material, a tiny diamond stylus actually engages the surface, usually metal, and gouges the pits. Although technically feasible, this concept has had no meaningful application in industry because the "no contact" laser systems offer inherent increased reliability, longevity and efficiency over mechanical systems.

A major objective in recording data on optical discs is controlling the geometry of the pits used to record data on the disc. Poor pit geometry makes the separation of duplicate discs from the disc stampers difficult. Also, data transmission can be affected by pits having raised areas surrounding the pit called berms, which are a common result in the dry process formula. An ideal pit is one formed without a surrounding raised berm area. Much modern research and development has been devoted to creating recorded optical discs having such ideal pits. However, the conventional techniques, discussed above, have not developed a manner of recording optical discs without generating the undesirable berm areas surrounding the pits used to record data.

JP-A-59 092449 discloses a process for forming an optical disc master having improved pit shape. The process comprises forming a composite reflective layer on a writing surface of a disc substrate. An optically active laminate is then applied to the composite reflective layer and data can be optically written in the optically active laminate by focusing a laser thereon. The composite reflective layer comprises a first layer of silver having a thickness in the order of 20 - 40 nm (200 - 400 Å) and a second layer applied thereto of germanium having a thickness in the order of 5 - 10 nm (50 - 100 Å). The composite reflective layer has a reflection factor of 30 - 40% after the optically active laminate has been applied thereto.

As can be seen from the foregoing discussion, the prior art possesses inherent limitations, and there continues to be a long standing need for a more efficient, less time consuming, and less expensive method for manufacture of an OD Master, that is effective in controlling pit geometry. The invention disclosed herein does just that.

According to the present invention, there is provided a process for making an optical disc master, comprising the steps of: making a disc substrate having at least one writing surface; applying an optically active laminate to said disc substrate within which pits can be formed by irradiation from a source of predetermined power and predetermined wavelength; optically writing data within said optically active laminate by focusing irradiation means on said optically active laminate to form pits within said optically active laminate; and creating a reflective layer on the writing surface of the disc substrate between the disc substrate and the optically active laminate; characterised in that said reflective layer is a partially reflective layer having a thickness of less than 7 nm (70 Å) and being formed of an opaque material.

The invention provides a process for forming optical disc masters for use in the manufacture of optical discs, wherein, laser tracking is improved and pits, used to record data, have their geometry controlled in a simple, effective and inexpensive manner. The invention utilizes an optically transparent (either polycarbonate or glass) disc substrate having an optical tracking groove molded or etched on a side, thereof. While in a cleanroom environment, a very thin layer (preferably on the order of 3 to 5 nm (30 to 50 Angstroms) and definitely less than 7 nm (70 Angstroms) of a substance having different optical characteristics from that of the disc substrate is applied to the grooved side of the substrate, such that partial reflectivity is obtained. The substance used to create this partially reflective layer must also have a high diffusion coefficient. An optically active laminate is then spin coated on top the partially reflective layer. The active laminate is encoded with data by laser means configured to focus a data modulated beam along the tracking groove causing ablation and/or consumption of the optically active laminate. The partially reflective layer has an index of refraction that is different from either the disc substrate or the optically active laminate, which both have a similar index of refraction. Thus, a laser can more effectively track the junction areas between the optically transparent disc substrate and optically active laminate layer due to the optical feedback received from the partially reflective layer.

The desired pit size and geometry is achieved by selecting the laser power in conjunction with the thickness of the partially reflective layer. The partially reflective layer affects the characteristics of the exothermic reaction when the optically active laminate is subjected to a focused laser. While the laser is focused on the optically active laminate creating heat, the partially reflective layer will also be focused on by the laser, and will cause additional heat to be generated. These effects have shown in related tests to result in a pit geometry that is virtually ideal. An ideal pit is one that has no berms or raised areas immediately surrounding the pit. The cause of these berms is not positively known, although it is thought that these berm raised areas are caused by a failure to ablate all of the optically active laminate from the circumferential portions of the desired pit areas.

It is an object of the invention to make a simple, effective and economical method of controlling the size and shape of the pits formed on optical discs to record data.

Another object of the invention is to provide a fast and inexpensive method of recording data in a controlled manner on optical discs.

Another object of the invention is to disclose an OD Mastering system capable of improved pit geometry and increased laser tracking that uses a commercially available optical head, laser means and optically transparent substrate to avoid the need for expensive capital equipment found in prior OD Mastering systems.

Another object of the invention is to provide improved pit formation on optical disc substrates such that a data modulated laser beam may accurately be focused upon and irradiate from either side of the disc and cause improved consumption, ablation and sublimation of the optically active layer.

Yet another object of the invention is to lower operating expenses encountered in producing an optical disc recording or an OD Master having ideal pit geometries and increased laser tracking.

It is still a further object of the invention to create an optical disc, used for optical disc mastering, that is easier to manufacture and track upon, and that can be recorded upon and read from either side of the disc.

These and further objects of the invention will become more readily apparent and obvious in view of the attached drawings, and description of preferred embodiments in light of the appended claims.

Figure 1 illustrates an isometric view of a typical disc as used in the invention.

Figure 2 is a cross-sectional view of the disc shown in Figure 1 along the diameter 2-2.

Figure 3 illustrates resulting pits used to record data on optical discs as created using conventional methods.

Figure 4 illustrates resulting pits created using the present invention.

Figure 5 illustrates the system used to record data on optical discs as envisioned within a first preferred embodiment of the invention.

Figure 6 illustrates a disc used in accordance with the first preferred embodiment of the present invention.

Figure 7 is a top view illustrating recorded pits within the optically active laminate of an optical disc.

Figure 8a illustrates an exploded cross-section of the unrecorded polymer disc having an optical tracking path as used with the present invention.

Figure 8b is an exploded view of a grooved area of Figure 2a displaying the layers used in the invention.

Figure 9 illustrates the system used to record data on optical discs as envisioned within a second preferred embodiment of the invention.

The following description is provided in order to enable any person skilled in the arts of optical disc mastering and optical disc recording to make and use the invention, and sets forth the best modes contemplated by the inventors for carrying out the invention. The invention as disclosed, herein, can be used with a variety of embodiments. There are three categories that determine the various embodiments that can possibly be used with the present invention. The first category concerns optical tracking paths. The present invention can be embodied on optical recording disc substrates with optical tracking paths' as well as those that are flat. The specific embodiments necessary for systems that record optical disc masters using discs substrates having an optical tracking path differ from those systems that record on disc substrates with no optical tracking. The second category relates to recording data on either a first surface or a second surface of the optical disc. Here, the present invention is useful in systems that focus a laser directly on the first surface upon which laser light is incident as well as for systems that focus laser light through the disc on the second surface to record data. The third category relates to systems employing a glass disc substrate versus those that employ a plastic disc substrate. Again, the invention is useful in embodiments employing either a glass or plastic substrate. The various combinations of these three categories yields eight (8) types of embodiments that are possible with the present invention. Only those embodiments most preferred by the inventors shall be discussed herein. However, it should be readily apparent that the invention applies to optical recording systems within each of the eight categories, and that various modifications of the specific embodiments disclosed herein will be obvious to those skilled in the above referenced arts, since the principles applied by the present invention are generic to all eight types of embodiments.

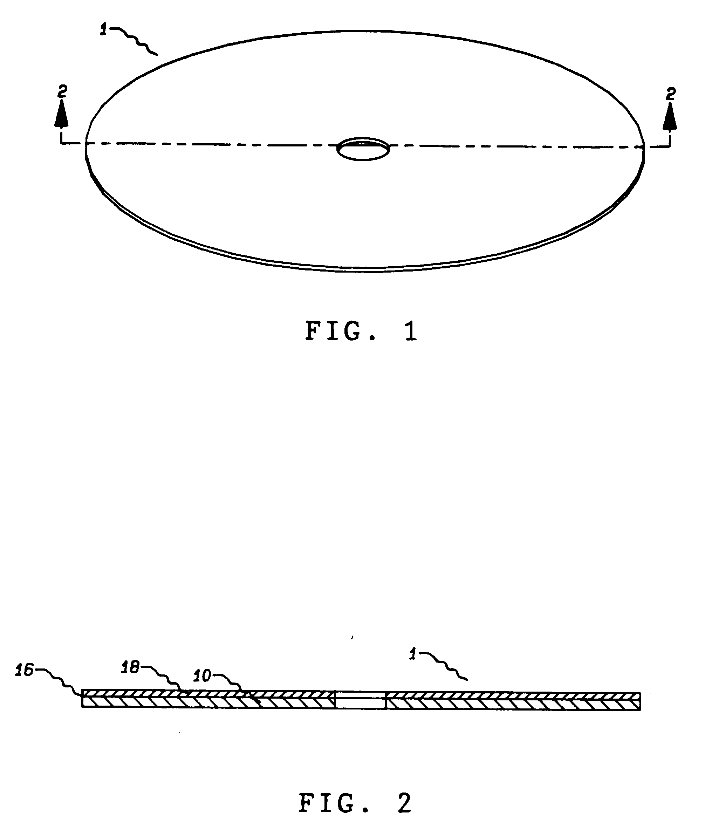

Referring now to Figure 1, which is an illustration of a disc 1 which is typical of an unrecorded optical disc manufactured according to the concepts of the present invention, in conjunction with Figure 2, which is a cross-sectional view of disc 1 as seen in Figure 1 along the plane defined by diameter 2-2 displaying the various layers of disc 1 that constitute the present invention, it can be seen that a partially reflective layer 16 is deposited on top of the disc substrate 10 on the surface of disc 1 used to record data. Immediately on top of the partially reflective layer 16 is formed an optically active layer 18 in which data can be recorded. The novel placement of partially reflective layer 16 is an essential feature of the invention since it provides increased reflectance useful in laser tracking. Additionally, it has been discovered that partially reflective layer 16 provides a means of controlling the geometry of the pits used to record data within optically active laminate 18.

The partially reflective layer 16 is formed by taking a material having a high diffusion coefficient, that is considered opaque in more common thicknesses, and applying it in such an extremely thin layer on the disc substrate 10, that substantial amounts of light may pass through the partially reflective layer 16 with reflectance and absorption accounting for only a very small percentage of incident light. The extreme thinness of the partially reflective layer 16 is an essential part of the present invention. By applying the partially reflective layer 16 in a layer having a thickness measured in tens of Angstroms, most of the incident light can pass through the partially reflective layer 16. However, a small percentage, on the order of one percent, of the incident light will be reflected or absorbed. Preferably, the partially reflective layer 16 consists of a substance that has a high degree of diffusivity to assist in creating a barrier between the optically active laminate 18, and the disc substrate 10. In this manner, the partially reflective layer 16 prevents the disc substrate 10 from acting as a heat sink for heat energy intended to be used to create pits. It is believed that the partially reflective layer 16 prevents the disc substrate 10 from acting as a heat sink for heat generated from laser irradiation that is intended to be used for pit creation.

The optically active laminate 18 is used to store data on the optical disc 1 as pits formed within the optically active laminate 18 as a result of irradiation from laser light. The use of an optically active laminate to store data in an optical disc is well known in the art of optical disc mastering. However, a novel feature of the present invention is the use of partially reflective layer 16 to improve laser tracking and control of pit geometry. The presence of the partially reflective layer 16 provides an additional junction for laser beam focusing, which is a useful feature in both read and write modes. Furthermore, the presence of the partially reflective layer 16 assists in the formation of pits within the optically active laminate 18 that are ideal in shape, having little or no raised areas surrounding the pits, but instead, have virtually all of the optically active laminate 18 removed from the pit target area by a combination of ablation, consumption and/or sublimation. These ideal pit shapes are especially useful in mass production of duplicate optical discs from the resulting optical disc master due to the elimination of the raised "berm" areas surrounding the pits which would otherwise cause complications in the manufacturing process.

The disc substrate 10 can either have an optical tracking path molded in or etched on the writing surface or simply be a flat disc depending on the specific embodiment. Also, disc substrate 10 can be either a transparent polycarbonate, a transparent polymethylmethacrylate (PMMA) or any other transparent substrate capable of carrying a tracking path, such as glass which would suffice for those embodiments employing an optical tracking path. The transparency of disc 10 is not an essential ingredient to the present invention in those embodiments where recording is accomplished by focusing a laser on the first surface of the disc to record data. Furthermore, conventional mastering techniques used in the optical disc industry write to optical disc surfaces without focusing through the disc substrates and the present invention is equally useful for these conventional systems.

Referring now to Figure 3, a diagram of pits created is illustrated using conventional disc mastering techniques employing an optical disc 30 substrate having an optically active laminate 38 applied to the disc surface. The pits 34, indicated by the dotted line, that result from laser irradiation of optically active laminate 38 have berms 36 surrounding the pit 34. These berms result in undesirable problems in laser tracking and especially in reproducing the recorded disc that has these defects. Berms in a master disc create a situation where it is difficult to separate the duplicate copies from a mold, which in turn makes mass production difficult.

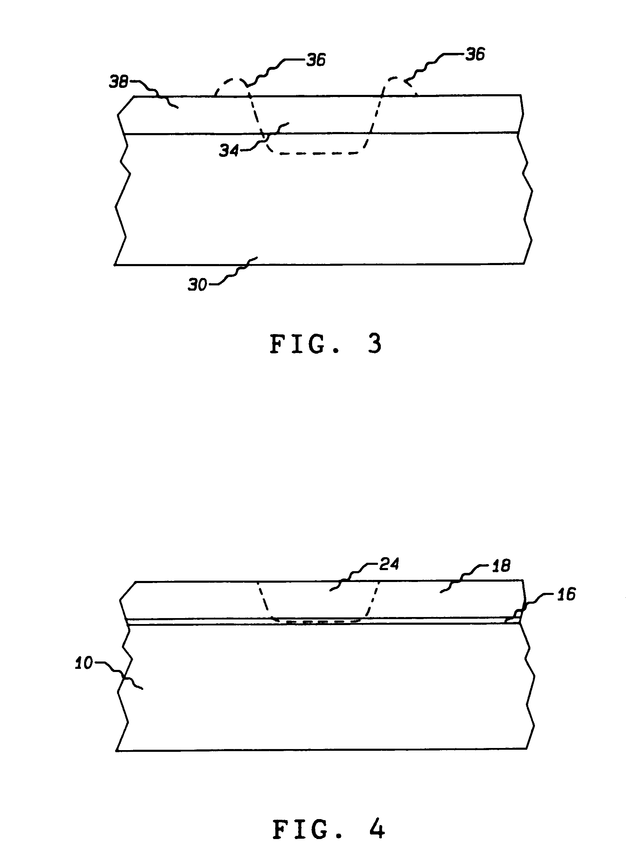

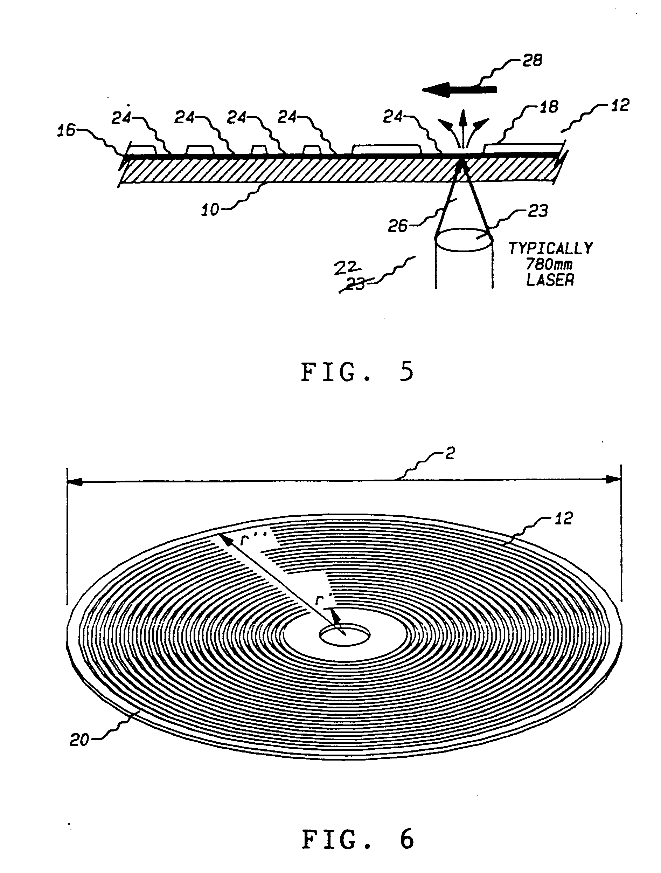

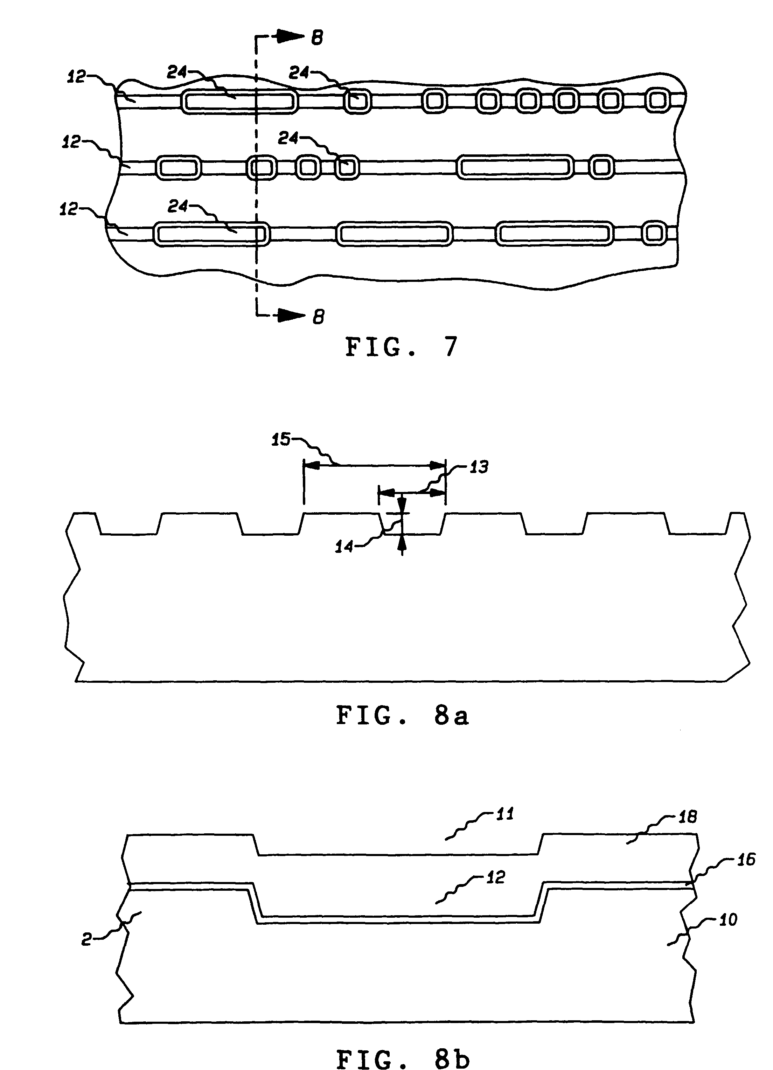

However, the present invention as seen in Figure 4 employs partially reflective layer 16 to create pits 24, indicated by the dotted line, within an optically active laminate 18 without berms, in what is widely considered throughout the industry as an ideal pit shape. The only difference in the structure of the present invention compared to conventional mastering techniques discussed above, is the presence of the partially reflective layer 16. Furthermore, it is believed that heat generated within the optically active laminate 18 is not directly absorbed within the disc substrate 10, because the partially reflective layer 16 acts as a heat barrier preventing heat generated from escaping into the disc substrate 10.

Once data is fully recorded on the disc, the OD Master is completed by a step of vacuum deposition, or other equivalent process, wherein, a thin layer, approximately 100 nm (1000 Angstroms (Å)), of an electrically conductive and optically reflective laminate, is placed on the disc. In the preferred embodiment the laminate is silver (Ag). Upon completion of the metalization process step, the resultant OD Master can then be electroplated by conventional means to form a stamper for replication of many identical discs.

The first preferred embodiment of the invention as shown in Figure 5, illustrates data recording by means of a disc spinning above an optical head 22 with a laser beam 26 passing through the disc substrate 10, which in this embodiment is a transparent polycarbonate material, to irradiate upon the optically active laminate 18. This orientation is a second surface type of the orientation that is typically used in reading prerecorded Compact Discs (CDs), and reading and writing with Write Once Read Many (WORM) discs. However, the present invention employs second surface writing to record optical disc masters. Conventional mastering techniques have typically used first surface recording to record optical disc masters. First surface mastering requires expensive cleanrooms. This is true for mastering systems using ablative surfaces or photo resist techniques. By disclosing techniques that can be used for second surface mastering, the present invention can eliminate the necessity of recording disc masters in a cleanroom.

The embodiment shown in Figure 5 employs a disc as shown in Figure 6 that has a tracking path 12 created upon the writing surface 20 of the polycarbonate disc substrate 10. The partially reflective layer 16 is made from tellurium and gold or any substance that can exhibit the proper characteristics of partial reflectivity, and diffusivity required by the present invention. Tellurium, or a tellurium alloy, is especially useful in obtaining these properties. Alloying tellurium with either bismuth or selenium prevents oxides and hydrides of tellurium from forming when subjected to irradiation. These are highly desirable results. The optically active laminate 18 is made from a nitrocellulose material containing an optically active dye compound. Without the dye, the nitrocellulose is optically transparent. Here, the invention has many advantages. The partially reflective layer 16 allows for significantly improved tracking and focusing on the junction area between the disc substrate 10 and the optically active laminate 18. The optical head 22 focuses laser 26 on the partially reflective layer 16 and the optically active laminate 18 causing the absorption of energy and a corresponding generation of heat. Conventional techniques rely on dye within the optically active laminate to generate heat and as a result pits generated using these conventional methods have raised berm areas surrounding the pits. However, the present invention uses the partially reflective layer 16 as well as the dye 19 within the optically active laminate 18 to generate heat used in creating pits 24. The result is that the present invention forms pits 24 having ideal shapes.

A laser source 22 is situated below the disc substrate 10, causing a finely focused laser beam 26 to pass through the disc substrate 10, and focus on the junction area between the partially reflective layer 16 and the optically active laminate 18. The laser source 22 is tangentially stationary, yet the tracking path 12 as indicated by arrow 28, is moving relative to the laser source 22 in Figure 5, enabling a series of data to be recorded thereon. The laser head 22 moves radially outward in a straight line from the center to the periphery of the disc 10 while spiral tracking path 12 and the disc 10 spins at a steadily declining rate to maintain a constant linear velocity (CLV) of approximately 1.2 meters per second for a point on the surface of the disc that is being irradiated by laser 26. The nitrocellulose dye compound 19 in the optically active laminate 18 and the tellurium in the partially reflective layer 16 reflect and absorb laser light resulting in the production of substantial heat energy in both the reflective layer 16 and the optically active laminate 18 which in turn generates a rapid chemical reaction in the optically active laminate 18 which is thereby consumed, ablated and sublimated to form pits 24. The partially reflective layer 16 prevents the heat generated within the optically active laminate 18 from escaping into the disc substrate. The tracking path 12, formed on the recording surface of disc substrate 10, is used for tracking and for pit formation. Pits are formed within the tracking path 12 having their geometry controlled by the dimensions of the tracking path 12. The partially reflective layer 16 exists on the same side as the tracking path 12. This configuration prevents the disc substrate from acting as a heat sink and enables the optically active laminate 18 and the partially reflective layer 16 to retain the heat absorbed from irradiation. The result is to form pits that effectively are ideally shaped.

Figure 7 illustrates a top view of data recorded along the tracking path 12 as indicated by ablated pits 24 which typically are 1/4 of a laser wavelength deep, 0.7 µm wide and 0.9 to 3.3 µm long. The variance in length represents data recorded in CD format as channel bits in -lengths commonly termed 3T to 11T, which represent the run length limited (RLL) code of recorded data. For tracking purposes it is desirable that the resulting groove 11 be in the realm of 1/8 of a laser wavelength or 975 Angstroms where laser wavelength is typically 7800 Angstroms (actually 650 Angstroms, 975/1.5 = 650 when the difference of 1.5 index of refraction is taken into account).

Figure 8a is an exploded view of a cross-sectional area of the disc 10 displaying the tracking path 12 in sufficient detail to discuss the relationship between the geometry of the tracking path 12 and the creation of pits 24 used to record data. The dimensions of the tracking path 12 and the resulting pits 24 are nominally as indicated in Figure 8a discounting the possibility of any nominal residual reactive laminate not ablated. Preferably, although not necessarily limited thereto, the tracking path 12 has width 13 equal to 0.78 µm, depth 14 being equal to 0.076 µm, and track pitch 15, i.e. the distance (including the "land" 38) between successive tracks or grooves, equal to 1.6 µm. These tracking dimensions will yield a pit approximately 1/4 of a laser wavelength deep.

Referring to Figure 8b, a very thin (on the order of about 2.5 to 5 nm (25 to 60 Angstroms) but definitely less than 7 nm (70 Angstroms)) partially reflective layer 16 is applied to the grooved surface 2 of the disc 10 upon which the tracking path 12 is delineated by any of the conventional techniques capable of applying such a thin layer: sputtering technique; thermal deposition; electron beam; or chemical deposition. Immediately above the reflective layer 16 is placed an optically active layer 18, approximately 130 nm to 140 nm thick, consisting of a nitrocellulose compound having a dye solution sensitive to the recording laser's wavelength.

The partially reflective layer 16 has a different index of refraction from either the disc substrate 10 or the optically active laminate 18. This difference in the index of refraction results in reflection which significantly increases the signal to noise ratio achieved in laser tracking of the tracking path 12. The materials used in forming the partially reflective layer 16 are normally considered opaque in greater thicknesses. However, the extreme thinness of the partially reflective layer 16 results in partial optical transparency. Many substances can be used to create the partially reflective layer. Optimum results have been achieved, so far, by creating the partially reflective layer 16 from tellurium or gold, although other minerals or metals could be employed as the reflective layer 16. Tellurium, or an alloy thereof, is the most preferred substance. The high degree of diffusivity of tellurium has made tellurium a favorite in optical disc recording. However, since tellurium has a relatively mediocre, at best, degree of reflectivity, it has not heretofore been used as a reflective layer per se. Gold, in contradistinction to tellurium, has an extremely high degree of reflectivity. However, gold does not possess the diffusivity of tellurium, making it less desirable. In using gold a much thinner partially reflective layer 16 is created, somewhere in the vicinity of 1.5 to 2.5 nm (15 to 26 Angstroms). Whereas, using tellurium a partially reflective layer in the vicinity of 5 nm (50 Angstroms) is used. The novelty of the present invention is not the particular element used as the reflective layer 16 inasmuch as it is the location and thinness of the partially reflective layer 16.

The geometry and dimensions of pits 24 formed on the grooved surface 2 imprinted on disc 10 can be formed to approach the shape of the tracking path 12. The dimensions of the tracking path 12 can be determined by various means customary in the art, including, mechanical/physical etching, photo resist etching and even continuous ablation of a laser by means of a continuous wave (CW) laser beam. Predictable results are obtained by operating within the confines of the tracking path 12 to create pits 24. Usage of the optical tracking path 12 assists in obtaining the desired path and pitch for recorded data. The control of pit geometry results from conjunctive variance of the thickness of the partially reflective layer 16 and optically active laminate 18 with laser power focus and wavelength. By having a laser focus on the area defined by the partially reflective layer 16 and the optically active laminate 18, heat is generated consistently throughout the target area. The effect is that none or very little of the optically active laminate 18 remains within the area of the tracking path 12 that has been subjected to laser irradiation. Pit formation leaves only the grooved walls or a nominal residual layer of optically active laminate 18, with essentially no surrounding berm area, yielding pits that are ideal in shape.

The optical laser head 22 used in the foregoing process is preferably a 780 nm wavelength laser, although other wavelength lasers could be used, mounted in an optical head which has a single spot tracking capability. It should be understood that different laser wavelengths dictate different groove and pit geometry. The optical head has a lens 23 with a numerical aperture of 0.6 such that the laser may be focused to a spot on the tracking path 12, which spot has a diameter approximately equal to the width, 0.6 µm, of the groove when laser beam 26 passes through the polymer substrate 10. Once lens 23 is focused, the optical tracking path 12 provides a means by which the optical laser head 22 can track on disc 10 and follow the spiral path necessary for optical disc encoding. The operating system utilizes conventional servo means to adjust the speed of spinning disc 10 to the radial translational movement of the optical head 22 in such fashion that the laser beam 26 is able to follow the spiral tracking path 12 with a constant linear velocity (CLV) from the inner most groove radius (r') to the outermost groove radius (r").

The laser diode used in the invention is a diode having sufficient power to ablate the optically active laminate. The diode during recording is modulated with the desired data stream and by such means forms the series of ablated pits 24 of various length aligned along the tracking path 12.

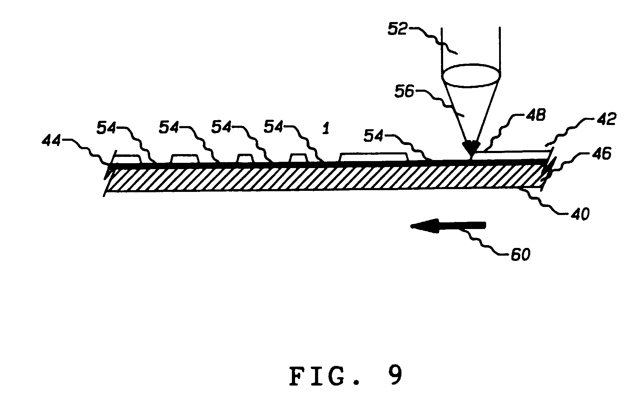

The second preferred embodiment of the invention as shown in Figure 9, illustrates data recording by means of a disc spinning below an optical head 52 with laser beam 56 focusing on an optically active laminate from above the disc. This configuration is similar to those used in conventional disc mastering techniques, and similarly employs a disc substrate 40 made from highly polished glass, having one side used as a writing surface 44. A very thin, partially reflective layer 46 (on the order of 3-5 nm (30-50 Angstroms)) is deposited on surface 44, in accordance with the overall concept of the invention. An optically active laminate 48 is then deposited in a uniform layer on the partially reflective layer 46. As can be seen there are similarities between this embodiment and the first embodiment in terms of the layers used to construct the disc. However, the second embodiment employs a glass disc substrate 40 with laser beam 56 focused from above the disc 40 onto the disc surface 44 where there is no optical tracking path. The second embodiment is, therefore, illustrative of the usefulness of the present invention in conventional systems used to make first article master discs. By focusing a laser on the first surface of the optical disc rather than focusing through the disc, as in the previous embodiment, the invention is operative within these conventional systems.

As in the first embodiment, the partially reflective layer 46 is preferably made from tellurium or gold, and the optically active laminate 48 is made from nitrocellulose material containing a dye compound to make it optically active. Again, as in the first embodiment, the partially reflective layer 46 allows for significantly improved tracking and focusing on the area including the disc substrate 40 and the optically active laminate 48. The optical head 52 focuses laser 56 on the partially reflective layer 46 and the optically active laminate 48 causing absorption of energy and a resulting generation of heat. Conventional techniques rely on dye within the optically active laminate to generate heat. However, the present invention uses the partially reflective layer 46 as well as the dye 49 within the optically active laminate 48 to generate the heat used to create pits 54.

The nitrocellulose dye compound 49 in the optically active laminate 48 and the tellurium in the partially reflective layer 46 reflect and absorb laser light resulting in substantial heat energy in both the reflective layer 46 and the optically active laminate 48 which in turn generates a rapid chemical reaction within the optically active laminate 48, which causes consumption, ablation and/or sublimation of the optically active laminate 48 to form pits 54. As in the first embodiment, and in accordance with the principles of the invention, this heat is distributed within the target area in a manner that results in pits being formed without berms surrounding the pits 54, in an ideal shape.

A major difference in this embodiment when compared to the first embodiment, is the fact that no optical tracking path exists on the unrecorded disc. The data is recorded in a pattern that can be used as a tracking path for reading of the recorded data by a read laser. To accomplish this, laser source 52 appears stationary to disc 40 during recording but actually moves radially outwardly in a straight line from the center to the periphery of disc 40 while disc 40 spins at a steadily declining rate to maintain a constant linear velocity (CLV) of approximately 1.2 meters per second for a point on the surface of the disc that is being radiated by laser beam 56. Pits 54 can be recorded in preferably a spiral manner.

## Claims

1. A process for making an optical disc master, comprising the steps of: making a disc substrate (10;40) having at least one writing surface (20;44); applying an optically active laminate (18;48) to said disc substrate (10;40) within which pits (24;54) can be formed by irradiation from a source (22;52) of predetermined power and predetermined wavelength; optically writing data within said optically active laminate (18;48) by focusing irradiation means (22;52) on said optically active laminate (18;48) to form pits (24;54) within said optically active laminate; and creating a reflective layer (16;46) on the writing surface (20;44) of the disc substrate between the disc substrate and the optically active laminate; characterised in that said reflective layer (16;46) is a partially reflective layer (16;46) having a thickness of less than 7 nm (70 Å) and being formed of an opaque material.

2. A process as claimed in claim 1, characterised in that the writing surface (20) of the disc substrate (10) has an optical tracking path (12) delineated therein.

3. A process as claimed in claim 2, characterised in that the step of optically writing data includes focusing the irradiation means (22) on said optical tracking path (12).

4. A process as claimed in claim 2, characterised in that the step of optically writing data includes focusing the irradiation means (22) on a land area (38) of the writing surface (20) adjacent to the optical tracking path (12).

5. A process as claimed in any preceding claim, characterised in that it includes the step of applying a conductive layer to said optically active laminate (18;48).

6. A process as claimed in any preceding claim, characterised in that the disc substrate (10) is made from a substance that is substantially optically transparent and said step of optically writing data includes focusing the irradiation means (22) through the disc substrate (10) onto the optically active laminate (18).

7. A process as claimed in any preceding claim, characterised in that the partially reflective layer (16;46) is created from a substance having a high degree of diffusivity.

8. A process as claimed in any preceding claim, characterised in that the irradiation means (22;52) comprises a laser.

9. A process as claimed in any preceding claim, characterised in that the partially reflective layer (16;46) is formed from tellurium, or an alloy thereof.

10. A process as claimed in any preceding claim, characterised in that the partially reflective layer (16;46) has a thickness in the order of 3 to 6 nm (30 to 60 Å).

11. An optical disc master, comprising: a disc substrate (10;40) having at least one writing surface (20;44); an optically active laminate (18;48) applied to said disc substrate (10;40) having pits (24;54) formed therein by an irradiation means (22;52) of predetermined power and predetermined wavelength focussed thereon; and a reflective layer (16;46) created on the writing surface (20;44) of the disc substrate (10;40) between the disc substrate and the optically active laminate; characterised in that said reflective layer (16;46) is a partially reflective layer (16;46) having a thickness less than 7 nm (70 Å) and being formed from an opaque material.

12. An optical disc master as claimed in claim 1, characterised in that it includes a conductive layer applied to said optically active laminate (18;48) to enable an optical disc stamper to be formed therefrom.

13. An optical disc master as claimed in claim 12, characterised in that it includes an optical tracking path (12) formed in the writing surface (20) of the disc substrate (10).

14. An optical disc master as claimed in claim 13, characterised in that the pits (24) are formed in the optical tracking path (12).

15. An optical disc master as claimed in claim 13, characterised in that the pits (24) are formed in a land area (38) adjacent to the optical tracking path (12).

16. An optical disc master as claimed in any one of claims 11 to 15, characterised in that the partially reflective layer (16;46) is formed from tellurium, or an alloy thereof.

17. An optical disc master as claimed in any one of claims 11 to 16, characterised in that the partially reflective layer (16;46) has a thickness in the order of 3 to 6 nm (30 to 60 Å).

## Patentansprüche

1. Ein Verfahren zur Herstellung einer optischen Matrizenplatte, das folgende Stufen umfaßt: Herstellung eines Plattenschichtträgers (10;40), der mindestens eine Schreiboberfläche (20;44) besitzt; Auftragen einer optisch aktiven Schicht (18;48) auf den genannten Plattenschichtträger (10;40), in welcher, mittels Bestrahlung von einer Quelle (22;52) von vorherbestimmter Stärke und vorherbestimmter Wellenlänge, Vertiefungen (24;54) geformt werden können; die optische Schreibung von Daten auf die genannte optisch aktive Schicht (18;48) indem eine Bestrahlungseinrichtung (22;52) auf die genannte optisch aktive Schicht (18;48) gerichtet wird, um Vertiefungen (24;54) in der genannten optisch aktiven Schicht zu formen; und die Schaffung einer reflektierenden Lage (16;46) auf der Schreiboberfläche (20;44) des Plattenschichtträgers zwischen dem Plattenschichtträger und der optisch aktiven Schicht; dadurch charakterisiert, daß die genannte reflektierende Lage (16;46) eine teilreflektierende Lage (16;46) ist, die eine Dicke von weniger als 7 nm (70 Å) besitzt und aus einem lichtundurchlässigen Material gebildet wird.

2. Ein Verfahren wie nach Anspruch 1, dadurch charakterisiert, daß sich in der Schreiboberfläche (20) des Plattenschichtträgers (10) eine optische Spurstrecke (12) befindet.

3. Ein Verfahren wie nach Anspruch 2, dadurch charakterisiert, daß die Stufe der optischen Schreibung von Daten die Richtung einer Bestrahlungseinrichtung (22) auf die genannte optische Spurstrecke (12) beinhaltet.

4. Ein Verfahren wie nach Anspruch 2, dadurch charakterisiert, daß die Stufe der optischen Schreibung von Daten die Richtung der Bestrahlungseinrichtung (22) auf ein Steggebiet (38) der Schreiboberfläche (20) direkt neben der optischen Spurstrecke (12) beinhaltet.

5. Ein Verfahren wie nach einem der vorhergehenden Ansprüche, dadurch charakterisiert, daß es die Stufe der Auftragung einer leitenden Lage auf die genannte optisch aktive Schicht (18;48) beinhaltet.

6. Ein Verfahren wie nach einem der vorhergehenden Ansprüche, dadurch charakterisiert, daß der Plattenschichtträger (10) aus einer Substanz gebildet wird, die im wesentlichen optisch transparent ist, und daß die genannte Stufe der optischen Schreibung von Daten die Richtung der Bestrahlungseinrichtung (22) durch den Plattenschichtträger (10) auf die optisch aktive Schicht (18) beinhaltet.

7. Ein Verfahren wie nach einem der vorhergehenden Ansprüche, dadurch charakterisiert, daß die teilreflektierende Lage (16;46) aus einer Substanz geschaffen wird, die einen hohen Grad an Diffusionsvermögen besitzt.

8. Ein Verfahren wie nach einem der vorhergehenden Ansprüche, dadurch charakterisiert, daß die Bestrahlungseinrichtung (22;52) einen Laser umfaßt.

9. Ein Verfahren wie nach einem der vorhergehenden Ansprüche, dadurch charakterisiert, daß die teilreflektierende Lage (16;46) aus Tellurium oder einer Legierung dessen gebildet wird.

10. Ein Verfahren wie nach einem der vorhergehenden Ansprüche, dadurch charakterisiert, daß die teilreflektierende Lage (16;46) eine Dicke von zwischen 3 bis 6 nm (30 bis 60 Å) besitzt.

11. Eine optische Matrizenplatte, die folgendes umfaßt: einen Plattenschichtträger (10;40), der zumindest eine Schreiboberfläche (20;44) besitzt; eine optisch aktive Schicht (18;48), die auf den genannten Plattenschichtträger (10;40) aufgetragen ist, und in der mittels einer Bestrahlungseinrichtung (22,52) von voherbestimmter Stärke und vorherbestimmter Wellenlänge, die darauf gerichtet ist, Vertiefungen gebildet werden; und eine reflektierende Lage (16;46), die auf der Schreiboberfläche (20;44) des Plattenschichtträgers (10;40) zwischen dem Plattenschichtträger und der optisch aktiven Schicht geschaffen ist; dadurch charakterisiert, daß die genannte reflektierende Lage (16;46) eine Dicke von weniger als 7 nm (70 Å) besitzt und aus einem lichtundurchlässigen Material gebildet wird.

12. Eine optische Matrizenplatte wie nach Anspruch 1, dadurch charakterisiert, daß sie eine leitende Lage besitzt, die auf der genannten optisch aktiven Schicht (18;48) aufgetragen ist, um es möglich zu machen, daß die Matrize einer optischen Platte daraus gebildet wird.

13. Eine optische Matrizenplatte wie nach Anspruch 12, dadurch charakterisiert, daß sie eine in der Schreiboberfläche (20) des Plattenschichtträgers (10) gebildete optische Spurstrecke (12) beinhaltet.

14. Eine optische Matrizenplatte wie nach Anspruch 13, dadurch charakterisiert, daß die Vertiefungen (24) in der optischen Spurstrecke (12) gebildet werden.

15. Eine optische Matrizenplatte wie nach Anspruch 13, dadurch charakterisiert, daß die Vertiefungen (24) in einem Steggebiet (38) direkt neben der optischen Spurstrecke (12) gebildet werden.

16. Eine optische Matrizenplatte wie nach einem der Ansprüche 11 bis 16, dadurch charakterisiert, daß die teilreflektierende Lage (16;46) aus Tellurium oder einer Legierung dessen gebildet wird.

17. Eine optische Matrizenplatte wie nach einem der Ansprüche 11 bis 16, dadurch charakterisiert, daß die teilreflektierende Lage (16;46) eine Dicke von zwischen 3 bis 6 nm (30 bis 60 Å) besitzt.

## Revendications

1. Processus pour fabriquer un père de disque optique, comprenant les opérations suivantes : fabriquer un substrat de disque (10;40) comportant au moins une surface d'enregistrement (20;44) ; appliquer une couche de stratifié active optiquement (18;48) sur ledit substrat de disque (10;40), dans laquelle des cuvettes (24;54) peuvent être formées par irradiation depuis une source (22;52) d'une puissance et d'une longueur d'onde prédéterminées ; l'enregistrement des données par un moyen optique dans ladite couche de stratifié active optiquement (18;48) en concentrant un moyen d'irradiation (22:52) sur ladite couche de stratifié active optiquement (18;48) afin de former des cuvettes (24;52) dans ladite couche de stratifié active optiquement ; et créer une couche réfléchissante (16:46) sur la surface d'enregistrement (20;44) du substrat du disque entre le substrat du disque et la couche de stratifié active optiquement ; caractérisé par le fait que ladite couche réfléchissante (16;46) est une couche partiellement réfléchissante (16;46) d'une épaisseur inférieure à 7 nm (70 Å) et qui est formée à partir d'une matière opaque.

2. Processus tel que revendiqué dans la revendication 1, caractérisé par le fait que la surface d'enregistrement (20) du substrat du disque (10) comporte un chemin de suivi optique (12) tracé dans celle-ci.

3. Processus tel que revendiqué dans la revendication 2, caractérisé par le fait que l'opération d'enregistrement des données par un moyen optique comprend la concentration du moyen d'irradiation (22) sur ledit chemin de suivi optique (12).

4. Processus tel que revendiqué dans la revendication 2, caractérisé par le fait que l'opération d'enregistrement des données par un moyen optique comprend la concentration du moyen d'irradiation (22) sur un intersillon (38) de la surface d'enregistrement (20) adjacent au chemin de suivi optique (12).

5. Processus tel que revendiqué dans n'importe quelle revendication précédente, caractérisé par le fait qu'il comprend une opération qui consiste à appliquer une couche conductrice sur ladite couche de stratifié active optiquement (18;48).

6. Processus tel que revendiqué dans n'importe quelle revendication précédente, caractérisé par le fait que le substrat du disque (10) est fabriqué à partir d'une substance essentiellement transparente optiquement et que ladite opération d'enregistrement des données par un moyen optique comprend la concentration du moyen d'irradiation (22) à travers le substrat du disque (10) sur ladite couche de stratifié active optiquement (18).

7. Processus tel que revendiqué dans n'importe quelle revendication précédente, caractérisé par le fait que la couche partiellement réfléchissante (16;46) est créée à partir d'une substance ayant un haut degré de diffusivité.

8. Processus tel que revendiqué dans n'importe quelle revendication précédente, caractérisé par le fait que le moyen d'irradiation (22;52) comprend un laser.

9. Processus tel que revendiqué dans n'importe quelle revendication précédente, caractérisé par le fait que la couche partiellement réfléchissante (16;46) est formée de tellure ou d'un alliage de cette matière.

10. Processus tel que revendiqué dans n'importe quelle revendication précédente, caractérisé par le fait que la couche partiellement réfléchissante (16;46) a une épaisseur de l'ordre de 3 à 6 nm (30 à 60 Å).

11. Père de disque optique comprenant : un substrat de disque (10;40) comportant au moins une surface d'enregistrement (20;44) ; une couche de stratifié active optiquement (18:48) appliquée sur ledit substrat de disque (10;40) comportant des cuvettes (24;54) qui y sont formées par un moyen d'irradiation (22;52) d'une puissance et d'une longueur d'onde prédéterminées qui est concentré sur cette couche ; et une couche réfléchissante (16;46) créée sur la surface d'enregistrement (20;44) du substrat du disque (10;40) entre le substrat du disque et la couche de stratifié active optiquement ; caractérisé par le fait que ladite couche réfléchissante (16;46) est une couche partiellement réfléchissante (16;46) d'une épaisseur inférieure à 7 nm (70 Å) et formée à partir d'une matière opaque.

12. Père de disque optique tel que revendiqué dans la revendication 1, caractérisé par le fait qu'il comprend une couche conductrice appliquée sur ladite couche de stratifié active optiquement (18;48) pour permettre à une matrice de pressage de disque optique d'être formée à partir de celle-ci.

13. Père de disque optique tel que revendiqué dans la revendication 12, caractérisé par le fait qu'il comprend un chemin de suivi optique (12) formé dans la surface d'enregistrement (20) du substrat du disque (10).

14. Père de disque optique tel que revendiqué dans la revendication 13, caractérisé par le fait que les cuvettes (24) sont formées dans le chemin de suivi optique (12).

15. Père de disque optique tel que revendiqué dans la revendication 13, caractérisé par le fait que les cuvettes (24) sont formées dans un intersillon (38) adjacent au chemin de suivi optique (12).

16. Père de disque optique tel que revendiqué dans n'importe quelle revendication 11 à 15, caractérisé par le fait que la couche partiellement réfléchissante (16;46) est formée à partir de tellure ou d'un alliage de cette matière.

17. Père de disque optique tel que revendiqué dans n'importe quelle revendication 11 à 16, caractérisé par le fait que la couche partiellement réfléchissante (16;46) a une épaisseur de l'ordre de 3 à 6 nm (30 à 60 Å).
